Europäisches Patentamt

European Patent Office

Office européen des brevets

(11) Veröffentlichungsnummer: **0 098 571**
**A2**

(12) **EUROPÄISCHE PATENTANMELDUNG**

(21) Anmeldenummer: **83106519.8**

(22) Anmeldetag: **04.07.83**

(51) Int. Cl.³: **G 06 F 11/16**

(30) Priorität: **07.07.82 DE 3225429**

(43) Veröffentlichungstag der Anmeldung: **18.01.84**
**Patentblatt 84/3**

(84) Benannte Vertragsstaaten: **AT BE DE FR GB NL**

(71) Anmelder: **SIEMENS AKTIENGESELLSCHAFT, Berlin und München Wittelsbacherplatz 2, D-8000 München 2 (DE)**

(72) Erfinder: **Schwartz, Rolf, Dipl.-Ing., Südring 59, D-6747 Annweiler (DE)**

(54) **Taktgeberanordnung für ein redundantes Steuersystem.**

(57) Die Erfindung bezieht sich auf eine Taktgeberanordnung für ein redundantes Steuersystem, bei dem je ein Taktgenerator einem Steuerkanal zugeordnet ist. Zur sicheren Synchronisierung der Taktsignale am Ausgang der Taktgeber untereinander weist jeder Taktgeber eine Anzahl Verzögerungsglieder (TV1 . . . TVk-1) auf, die hintereinander an den Ausgang eines Oszillators (O) geschaltet sind. Abhängig von einem Vergleich der Taktsignale (SAI . . . SAm) (Systemtakte) untereinander wird jeweils das Ausgangssignal (SO . . . Sk-1) des Verzögerungsgliedes (TV1 . . . TVk-1) als Taktsignal (Systemtakt) ausgewählt, das in Phase mit den anderen Taktsignalen der jeweils anderen Steuerkanäle liegt.

Die Erfindung ist vor allem bei sicheren Prozeßrechneranordnungen anwendbar.

SIEMENS AKTIENGESELLSCHAFT
Berlin und München

0098571

Unser Zeichen
VPA 82 P 4428

_1_

## Taktgeberanordnung für ein redundantes Steuersystem

Die Erfindung betrifft eine Taktgeberanordnung für ein redundantes Steuersystem, bei dem eine Anzahl Steuerkanäle mit untereinander synchronisierten Taktsignalen fehlertolerant versorgt werden, mit einem jedem Steuerkanal zugeordneten Oszillator und je einer an den Taktgenerator angeschalteten Phasenregelschleife, die aus dem Vergleich der Phasenlage eines Taktsignals mit der Phasenlage eines Referenzsignals ein Signal zur Regelung der Phase am Ausgang jedes der Taktgeneratoren der Taktgeberanordnung erzeugt.

Bei einer bekannten Taktgeberanordnung dieser Art (DE-AS 24 23 276) weist jeder jeweils einem Steuerkanal zugeordneter Taktgenerator eine Phasenregelschleife auf, bei der die Phase des einen Taktsignals mit einer Phase eines Referenzsignals verglichen wird. Das Referenzsignal wird mittels eines Mehrheitsentscheiders gebildet, der zur Synchronisierung die Taktsignale aller Taktgeneratoren auswertet und nach einer vorgegebenen Bedingung ein bestimmtes Taktsignal als Mehrheits- bzw. Referenzsignal an seinem Ausgang abgibt. Zur Auswertung des Phasenunterschiedes ist jeweils in jeder Phasenregelschleife ein Phasendetektor vorhanden, der ein vom jeweiligen Phasenunterschied abhängiges Steuersignal erzeugt, das zu einer Veränderung der Frequenz- bzw. Phasenlage des Taktsignals des jeweiligen Taktgenerators dient. Diese im wesentlichen analoge Nachregelung der Frequenz des Taktgenerators ist hinsichtlich Temperatureinflüssen und sonstigen Störeinwirkungen auf den Phasendetektor und den Taktgenerator empfindlich; außerdem sind regelungstechnische Mitkopplungen innerhalb der Phasenregelschleife nicht zu vermeiden.

Ag 4 Scl / 25.06.1982

0098571

Der Erfindung liegt die Aufgabe zugrunde, eine Taktgeberanordnung zu schaffen, die zur sicheren Synchronisation mehrerer Taktsignale untereinander eine außerordentlich störfeste und sichere Nachregelung der Phasenlagen der Taktsignale ermöglicht.

Zur Lösung dieser Aufgabe ist bei einer Taktgeberanordnung der eingangs angegebenen Art erfindungsgemäß in jeder Phasenregelschleife eine Anzahl von Verzögerungsgliedern enthalten, die an den Ausgang des Oszillators in Reihe geschaltet sind, wobei jedes Verzögerungsglied das ursprüngliche Taktsignal des Oszillators um einen vorgegebenen Betrag phasenverzögert, eine Multiplexschaltung als Bestandteil der Phasenregelschleife vorhanden, an deren Eingänge der Ausgang des Oszillators und die Ausgänge der Verzögerungsglieder geschaltet sind und die Multiplexschaltung eine Schaltvorrichtung enthält, mit der, über Adressiereingänge gesteuert, einer der Eingänge auf den Ausgang der Multiplexschaltung durchschaltbar ist, und die Phasenregelschleife einen Adreßwähler aufweist, dessen Ausgänge mit den Adreßeingängen der Multiplexschaltung verbunden sind und die abhängig vom Ausgangssignal eines Phasendetektors, der das Referenzsignal und das Taktsignal miteinander vergleicht, eine solche Adresse erzeugt, die zur Durchschaltung eines solchen eventuell phasenverzögerten Taktsignals führt, das den geringstmöglichen Phasenunterschied zum Referenzsignal aufweist.

Die erfindungsgemäße Taktgeberanordnung gewährleistet bei einfachem Aufbau eine überaus sichere Funktionsweise, da mittels der erfindungsgemäßen Phasenregelschleife eine digitale Phasenänderung des Taktsignals am Ausgang jedes Taktgenerators erfolgt, bei der die Taktfrequenz des Oszillators nicht beeinflußt wird. Da alle die Phasenlage des Taktsignals beeinflussenden Bausteine (insbesondere die Verzögerungsglieder) gleiche Eigenschaften aufweisen und eine Änderung der Phasenlage nur durch

0098571

eine Änderung der Schaltzustände der Schaltvorrichtung in der Multiplexschaltung erfolgt, sind außerordentlich stabile Phasen- und Frequenzverhältnisse der im gesamten Steuersystem auftretenden Taktsignale gewährleistet, so daß die Synchronisation der Taktsignale untereinander auch bei hohen Taktfrequenzen mit hoher Stabilität durchzuführen ist.

Bei einer Ausführungsform mit einem jeweils jedem Oszillator zugeordneten Mehrheitsentscheider, an dessen Eingänge das Taktsignal der jeweils zugeordneten Phasenregelschleife und die Taktsignale aller weiteren Phasenregelschleifen geführt sind und der ein Referenzsignal nach einem vorbestimmten Mehrheitsentscheid abgibt, kann die erfindungsgemäße Taktgeberanordnung in vorteilhafter Weise so aufgebaut werden, daß jeder Mehrheitsentscheider jeweils mit den Ausgangssignalen (Taktsignalen) aller Multiplexschaltungen beaufschlagt ist. Hiermit ist gewährleistet, daß bei einem vorgegebenen Mehrheitsentscheid bei der Auswertung der verschiedenen Taktsignale eine fehlertolerante Auslegung des gesamten Steuersystems erreicht werden kann.

Weitere Ausgestaltungen der Erfindung sind in den Unteransprüchen aufgeführt.

Die Erfindung wird anhand der Figuren erläutert, wobei
Figur 1 ein Prinzipschaltbild eines Ausführungsbeispiels der Erfindung,
Figur 2 ein weiteres Ausführungsbeispiel mit detaillierteren Schaltungsmerkmalen,
Figur 3 ein drittes Ausführungsbeispiel und
Figur 4 ein Impulsdiagramm der in .dem Ausführungsbeispiel gemäß Figur 3 auftretenden Taktsignale darstellt.

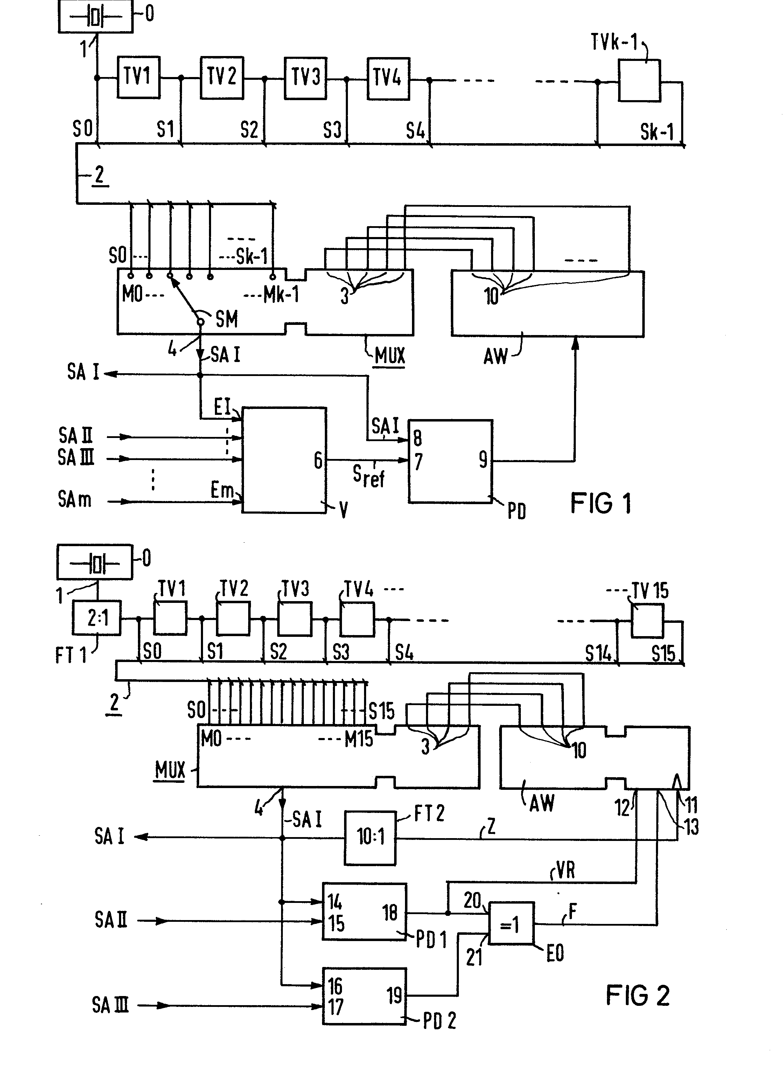

Bei dem in der Figur 1 dargestellten Ausführungsbeispiel ist ein frei laufender Quarzoszillator O vorhanden; dieser Oszillator O ist Bestandteil eines Taktgenerators und

0098571

dient der Erzeugung eines Taktsignals für einen Steuerkanal, wobei für eine beliebige Anzahl m weiterer Steuerkanäle ein gleicher Taktgenerator wie der hier beschriebene vorgesehen ist. Am Ausgang 1 des Oszillators O steht das Taktsignal SO als Grundtakt an. Das Taktsignal SO ist auf den Eingang eines ersten Verzögerungsgliedes TV1 und über eine Leitung 2 auf einen Eingang MO einer Multiplexschaltung MUX geführt. Hinter das Verzögerungsglied TV1 sind in Reihe weitere Verzögerungsglieder TV2, TV3, TV4 ... TVk-1 geschaltet, wobei die an ihren jeweiligen Aus-gängen anliegenden Taktsignale S1 ... Sk-1 über die Verbindungsleitung 2 auf ihnen zugeordnete Eingänge M1 ... Mk-1 der Multiplexschaltung MUX geführt sind. Die Ausgangssignale der Verzögerungsglieder TV1 ... TVk-1 sind gegenüber ihrem Eingangssignal jeweils um tv phasenverzögert, wobei die Summe aller Phasenverzögerungen tv bis zum letzten Verzögerungsglied TVk-1 der Periodendauer T des Oszillators O entspricht.

Abhängig von jeweils an Adreßeingängen 3 der Multiplexschaltung anliegenden Adressen wird einer der Eingänge MO ... Mk-1 mittels einer Schaltvorrichtung SM auf einen Ausgang 4 der Multiplexeinrichtung MUX durchgeschaltet, wobei die Schalterstellung der Schaltvorrichtung SM über Adreßeingänge 3 der Multiplexschaltung MUX gesteuert wird. Am Ausgang 4 liegt hier somit ein Taktsignal SAI an, das als Systemtakt für den jeweils zugeordneten Steuerkanal des Steuersystems dient. Das Taktsignal SAI ist ebenso wie alle anderen Taktsignale SAII ... SAm der weiteren, jeweils gleich aufgebauten Taktgeneratoren auf Eingänge EI ... Em eines Mehrheitsentscheiders V geführt. Der Mehrheitsentscheider V entscheidet nach einem vorbestimmten Kriterium - beispielsweise müssen n der m Taktsignale SAI ... SAm gleich sein -, welches Taktsignal als Referenzsignal $S_{ref}$ am Ausgang 6 auftritt. Bei n = 2 und m = 3 ergibt sich ein 2v3-System. Das Referenzsignal $S_{ref}$ ist auf einen Eingang 7 eines Phasendetektors PD geführt;

an einem weiteren Eingang 8 des Phasendetektors PD liegt hier das Taktsignal SAI (in jedem Fall das Taktsignal des jeweils zugeordneten Taktgenerators) an. Abhängig vom Vergleich der Phasenlagen beider Signale an den Eingängen 7 und 8 steht am Ausgang 9 des Phasendetektors PD ein Signal an, das einen Adreßwähler AW derart steuert, daß an den Ausgängen 10 des Adreßwählers AW Adreßsignale auf die Adreßeingänge 3 der Multiplexschaltung MUX geführt werden, die zu einer Betätigung der Schaltvorrichtung SM und zu einer Verringerung des Phasenunterschiedes der beiden Taktsignale am Eingang des Phasendetektors PD führt. Beispielsweise ist beim dargestellten Ausführungsbeispiel das Taktsignal SAI als Systemtakt gleich dem Taktsignal S2 am Ausgang des Verzögerungsgliedes TV2.

In der Figur 2 ist ein einzelner Taktgenerator einer 2v3-Taktgeberanordnung - die somit drei dieser Taktgeneratoren umfaßt - dargestellt. Bausteine, die mit denen in der Figur 1 übereinstimmen, sind mit gleichen Bezugszeichen versehen.

An den Ausgang 1 des Oszillators O ist ein Frequenzteiler FT1 angeschaltet, der die Frequenz des Taktsignals um den Faktor 2 : 1 herunterteilt und somit ein Tastverhältnis von 1 : 1 des Taktsignals SO (Grundtakt) herstellt. Die Frequenz des Taktsignals am Ausgang 1 des Oszillators O kann beispielsweise 9,6 MHz betragen, wodurch sich eine Frequenz des Taktsignals SAI (Systemtakt) von 4,8 MHz einstellt. An den Ausgang des Frequenzteilers FT1 sind die Verzögerungsglieder, beim dargestellten Beispiel TV1 ... TV15, angeschaltet. Somit ergeben sich Taktsignale SO ... S15, die an entsprechenden Eingängen MO ... M15 der Multiplexschaltung MUX anliegen. Die Phasenverzögerung beim dargestellten Beispiel mit der oben erwähnten Frequenz des Taktsignals beträgt für alle Verzögerungsglieder 13 ns.

An den Adreßeingängen 3 der Multiplexschaltung MUX liegt hier ein BCD-codiertes Adreßsignal an, das wie beim Beispiel nach der Figur 1 die Durchschaltung eines der Taktsignale SO ... S15 auf den Ausgang 4 der Multiplexschaltung MUX bewirkt. Der Adreßwähler AW ist bei dem hier dargestellten Ausführungsbeispiel als Vorwärts-Rückwärts-Zähler ausgeführt, der an seinem Eingang 11 einen Zähltakt Z erhält. Der Zähltakt Z ist aus dem Taktsignal am Ausgang 4 der Multiplexschaltung MUX abgeleitet, wobei die Taktfrequenz mit einem Frequenzteiler FT2 im Verhältnis 10 : 1 heruntergesetzt ist.

Die Auswahl einer bestimmten Adresse im Adreßwähler AW wird mittels Signalen VR und F durchgeführt, wobei das Signal VR eine Entscheidung über Vorwärts- oder Rückwärtszählen bewirkt und das Signal F ein Freigabesignal für den Zähltakt Z darstellt. Zur Erzeugung der Signale VR und F sind Phasendetektoren PD1 und PD2 vorhanden, an deren jeweils ersten Eingang das Taktsignal SAI (hier Systemtakt) anliegt; am zweiten Eingang des ersten Phasendetektors PD1 liegt das Taktsignal SAII des hier nicht dargestellten zweiten Taktgenerators, und am zweiten Eingang 17 des zweiten Phasendetektors PD2 liegt das Taktsignal SAIII des hier ebenfalls nicht dargestellten dritten Taktgenerators an. Die Phasendetektoren PD1 und PD2 sind so aufgebaut, daß bei voreilenden Taktsignalen an den ersten Eingängen 14 bzw. 16 am Ausgang ein "O"-Signal liegt. Der erste Phasendetektor PD1 vergleicht die Phasenlage des eigenen Taktsignals (hier Taktsignal SAI) mit dem Taktsignal SAII, der zweite Phasendetektor PD2 vergleicht das eigene Taktsignal SAI mit dem Taktsignal SAIII. Liefern beim dargestellten Ausführungsbeispiel die Phasendetektoren PD1 und PD2 unterschiedliche Ergebnisse an ihren Ausgängen, dann liegt hier die Flanke des Taktsignals SAI zwischen denen der Taktsignale SAII und SAIII. Die Ausgänge 18 und 19 der Phasendetektoren PD1 und PD2 sind auf

0098571

Eingänge 20 und 21 einer Exklusiv-ODER-Schaltung EO geführt, die an ihrem Ausgang unter bestimmten Bedingungen das Freigabesignal F erzeugt.

Im oben erwähnten Fall, bei dem die Ausgangsgrößen an den Ausgängen 18 und 19 der Phasendetektoren PD1 und PD2 ungleich sind, wird somit kein Freigabesignal für den Adreßwähler AW erzeugt, so daß eine Änderung des Taktsignals SAI am Ausgang der Multiplexschaltung MUX nicht erfolgt. Sind die Signale an den Ausgängen 18 und 19 gleich, d. h., das Taktsignal SAI eilt beispielsweise beiden Taktsignalen SAII und SAIII voraus, so wird am Ausgang der Exklusiv-ODER-Schaltung EO ein Freigabesignal F erzeugt, und die mit dem Adreßwähler AW erzeugte Adresse wird mittels des Zähltakts Z verändert. Zur Festlegung der Richtung der Änderung ist der Ausgang 18 des Phasendetektors PD1 mit dem Eingang 12 des Adreßwählers AW verbunden, wobei hier das Vorwärts-Rückwärts-Signal VR übertragen wird. Eilt beispielsweise das Taktsignal SAI dem Taktsignal SAII voraus (Signal am Ausgang 18 ist gleich Null), so wird der Adreßwähler AW über seinen Eingang 12 zum Vorwärtszählen veranlaßt, wodurch die Schaltvorrichtung SM in der Multiplexschaltung MUX in Richtung einer größeren Phasenverzögerung - d. h. in Richtung Taktsignal S15 - verändert wird.

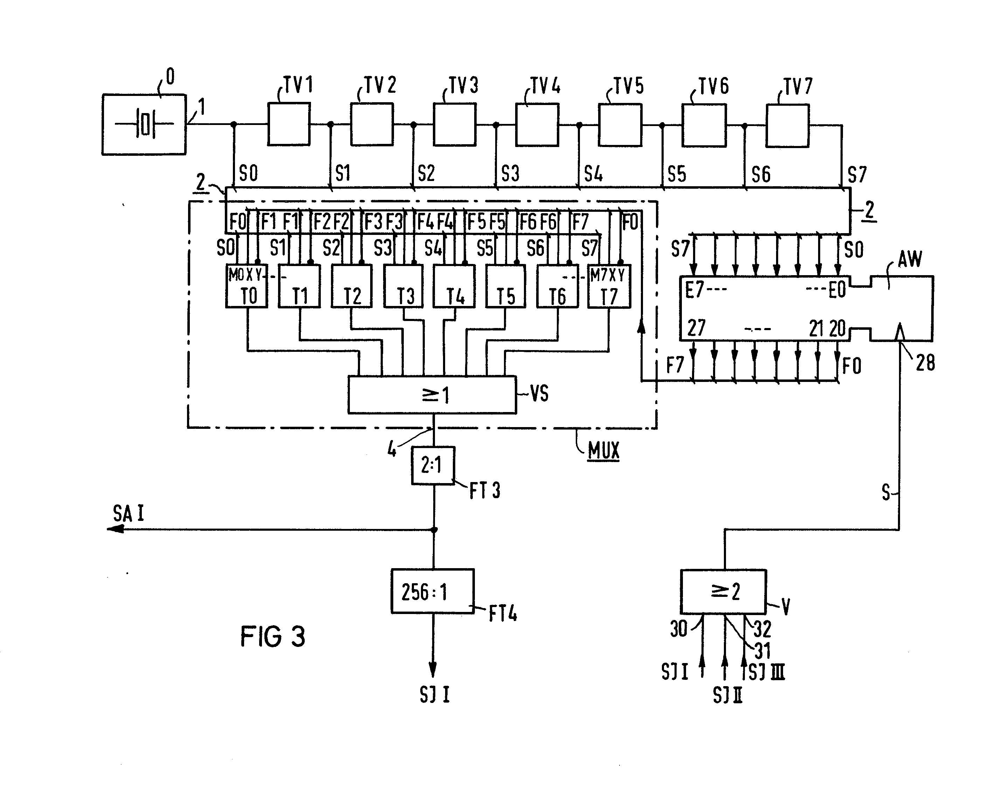

Auch bei dem in der Figur 3 dargestellten Ausführungsbeispiel handelt es sich um einen Taktgenerator, der Bestandteil einer 2v3-Taktgeberanordnung ist, wobei somit auch hier jeweils drei voneinander unabhängige, jedoch synchrone Taktsignale für drei Steuerkanäle erzeugt werden.

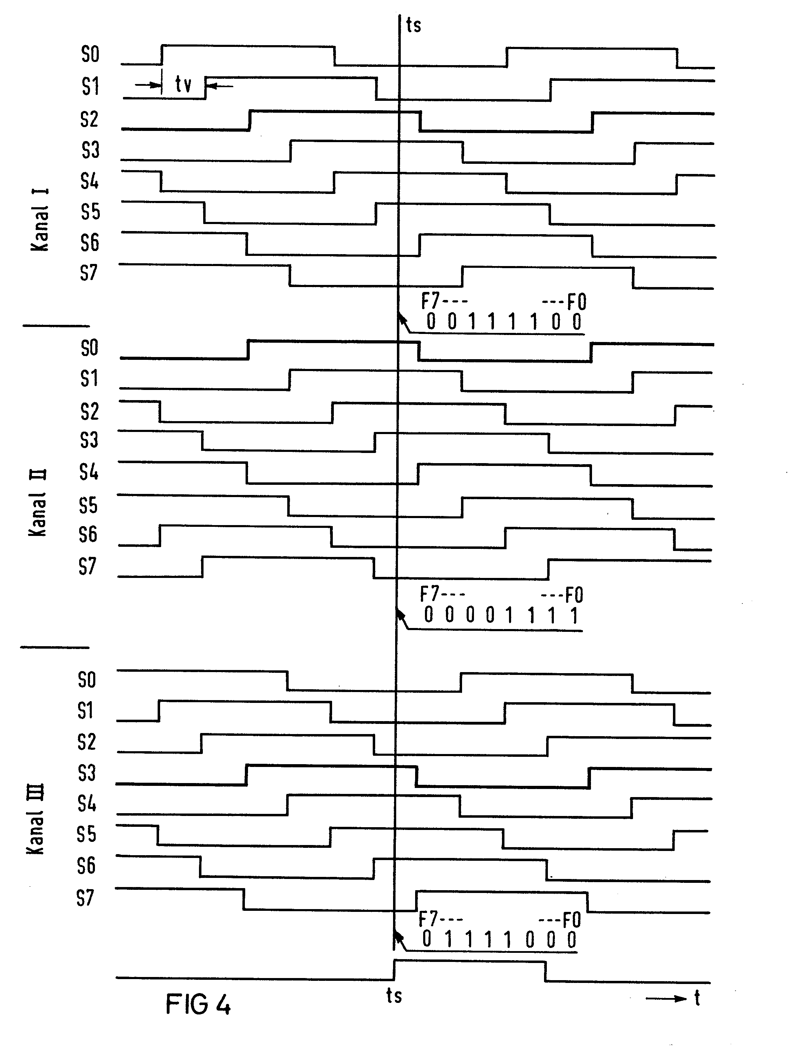

Zur Erläuterung dieses Ausführungsbeispiels wird gleichzeitig auf die Figur 4 verwiesen, in dem die bei diesem Ausführungsbeispiel auftretenden Taktsignale in einem Impulsdiagramm dargestellt sind. Bausteine aus der Figur 3, die mit entsprechenden Bausteinen der anderen Figuren übereinstimmen, sind mit gleichen Bezugszeichen versehen.

Die Verzögerungsglieder TV1 ... TV7 nach diesem Ausführungsbeispiel werden beispielsweise mit einem Taktsignal SO (Systemtakt) von 19,2 MHz versorgt. Die Phasenverzögerung tv beträgt somit bei jedem Verzögerungsglied TV1 ... TV7 6,5 ns. Jedes Taktsignal SO ... S7 kann durch ein Halbleiterschaltelement TO ... T7 der Multiplexschaltung MUX auf den Ausgang 4 der Multiplexschaltung MUX durchgeschaltet werden. Die Taktsignale SO ... S7 liegen hierbei an Signaleingängen MO ... M7 der Halbleiterschaltung TO ... T7 an; an Adreßeingängen X, Y der Halbleiterschalter TO ... T7 liegen Adreßsignale FO ... F7 an. Am ersten Halbleiterschalter TO liegt das Adreßsignal FO und F1, am zweiten Halbleiterschalter T1 liegen die Adreßsignale F1 und F2 usw. an, und am letzten Halbleiterschaltelement T7 liegen die Adreßsignale F7 und wiederum FO an. Die Adreßsignale FO ... F7 liegen an Ausgängen 20 ... 27 des Adreßwählers AW an, der hier als 8-Bit-Datenregister ausgeführt ist. Die Binärzustände an den Ausgängen 20 ... 27 werden durch Abspeicherung der Binärzustände der Taktsignale SO ... S7 zu einem festgelegten Zeitpunkt ts durchgeführt. Hierzu ist auf das Impulsdiagramm nach Figur 4 zu verweisen, wo beispielsweise für den ersten Steuerkanal (Taktsignal SAI) alle Taktsignale SO ... S7 mit ihrer jeweiligen Phasenverzögerung tv über der Zeit dargestellt sind. Aus den Binärzuständen dieser Taktsignale SO ... S7 zu einem vorgegebenen Zeitpunkt ts werden die Adreßsignale FO ... F7 am Ausgang des Adreßwählers AW bestimmt. Das gleiche gilt für die dem zweiten und dritten Steuerkanal zugeordneten Taktsignale SAII und SAIII.

Die Abspeicherung zum Zeitpunkt ts wird mittels Synchronisierimpulsen S durchgeführt, die an einem Eingang 28 des Adreßwählers AW anliegen. Aus dem Bitmuster dieses Ausgangssignals des Adreßwählers ist erkennbar, wo sich zum Zeitpunkt der Abspeicherung beispielsweise die negative Flanke des Taktsignals SO befindet (Übergang im Bitmuster von 0 auf 1).

Der Übergang von 0 auf 1 liegt im ersten Steuerkanal zwischen den Taktsignalen S1 und S2, im zweiten Steuerkanal zwischen den Taktsignalen S7 und SO und im dritten Steuerkanal zwischen den Taktsignalen S2 und S3. Es ist somit möglich zu erkennen, welche der Taktsignale der drei Steuerkanäle phasengleich sind, und somit können jeweils die Halbleiterschalter betätigt werden, die Taktsignale gleicher Phasenlage an den Ausgang 4 der Multiplexschaltung MUX abgeben. Zum Vergleich der drei Taktsignale SAI ... SAIII werden diese Taktsignale eines jeden Steuerkanals jeweils über einen Frequenzteiler FT4 geführt, der beim dargestellten Ausführungsbeispiel eine Frequenzteilung um den Faktor 256 bewirkt und sodann jeweils auf einen Eingang 30, 31 bzw. 32 eines Mehrheitsentscheiders V geführt. Die Synchronisierimpulse SJI, SJII und SJIII an den Ausgängen der Frequenzteiler FT4 stellen nach einer 2v3-Mehrheitsentscheidung den Synchronisierimpuls S dar, der am Eingang 28 des Adreßwählers AW zu einer Speicherung des jeweiligen Bitmusters der Taktsignale SO ... S7 führt. Durch den Mehrheitsentscheider V ist bei diesem Ausführungsbeispiel sichergestellt, daß bei Ausfall eines Taktgebers die beiden anderen Taktgeber funktionsfähig sind und weiterhin Abfrageimpulse S erhalten und somit synchrone Taktsignale (Systemtakte) ausgeben.

7 Patentansprüche
4 Figuren

Patentansprüche

1. Taktgeberanordnung für ein redundantes Steuersystem, bei dem eine Anzahl Steuerkanäle mit untereinander synchronisierten Taktsignalen fehlertolerant versorgt werden, mit

a) einem jedem Steuerkanal zugeordneten Oszillator und

b) je einer an den Taktgenerator angeschalteten Phasenregelschleife, die aus dem Vergleich der Phasenlage eines Taktsignals mit der Phasenlage eines Referenzsignals ein Signal zur Regelung der Phase am Ausgang jedes der Taktgeneratoren der Taktgeberanordnung erzeugt,

d a d u r c h   g e k e n n z e i c h n e t ,   daß

c) jede Phasenregelschleife (PR) eine Anzahl (k-1) von Verzögerungsgliedern (TV) enthält, die an den Ausgang des Oszillators (O) in Reihe angeschaltet sind, wobei jedes Verzögerungsglied (TV) das ursprüngliche Taktsignal (SO) des Oszillators (O) um einen vorgegebenen Betrag (tv) phasenverzögert,

d) eine Multiplexschaltung (MUX) als Bestandteil der Phasenregelschleife (PR) vorhanden ist, an deren Eingänge der Ausgang des Oszillators (O) und die Ausgänge der Verzögerungsglieder (TV) geschaltet sind und

d1) die Multiplexschaltung (MUX) eine Schaltvorrichtung (SM) enthält, mit der, über Adressiereingänge gesteuert, einer der Eingänge auf den Ausgang der Multiplexschaltung (MUX) durchschaltbar ist, und daß

e) die Phasenregelschleife (PR) einen Adreßwähler (AW) aufweist, dessen Ausgänge mit den Adreßeingängen der Multiplexschaltung (MUX) verbunden sind und die abhängig vom Ausgangssignal eines Phasendetektors (PD), der das Referenzsignal ($S_{ref}$) und das Taktsignal (SAI ...) miteinander vergleicht, eine solche Adresse erzeugt, die zur Durchschaltung eines solchen eventuell phasenverzögerten Taktsignals (SO ... Sk-1) führt, das den geringstmöglichen Phasenunterschied zum Referenzsignal $(S_{ref})$ aufweist.

2. Taktgeberanordnung nach Anspruch 1, mit

f) einem jeweils jedem Oszillator (O) zugeordneten Mehrheitsentscheider (V), an dessen Eingänge das Taktsignal (SAI ...) der jeweils zugeordneten Phasenregelschleife (PR) und die Taktsignale aller weiteren Phasenregelschleifen (PR) geführt sind und der ein Referenzsignal $(S_{ref})$ nach einem vorbestimmten Mehrheitsentscheid abgibt,

d a d u r c h   g e k e n n z e i c h n e t ,   daß

g) jeder Mehrheitsentscheider (V) jeweils mit den Ausgangssignalen (Taktsignalen TV1 ...) aller Multiplexschaltungen beaufschlagt ist.

3. Taktgeberanordnung nach Anspruch 1,   d a d u r c h   g e k e n n z e i c h n e t ,   daß

h) das Referenzsignal das Taktsignal (SAI ...) am Ausgang einer beliebig ausgewählten Phasenregelschleife (PR) ist.

4. Taktgeberanordnung nach einem der Ansprüche 1 bis 3,   d a d u r c h   g e k e n n z e i c h n e t ,   daß

i) alle Verzögerungsglieder (TV) so aufgebaut sind, daß sie eine gleiche Phasenverzögerung (tv) bewirken und daß die Summe aller Phasenverzögerungen (tv) der Periodendauer (T) des Taktsignals (SO) am Ausgang des jeweiligen Oszillators (O) entspricht.

5. Taktgeberanordnung nach einem der vorhergehenden Ansprüche,   d a d u r c h   g e k e n n z e i c h n e t ,   daß

j) zwischen den Ausgang jedes Oszillators (O) und die Verzögerungsglieder (TV) ein Frequenzteiler (FT1) zur Halbierung der Taktfrequenz des Taktsignals (SO) geschaltet ist.

6. Taktgeberanordnung nach einem der Ansprüche 2 bis 5,
d a d u r c h   g e k e n n z e i c h n e t , daß

k) bei einem Steuersystem mit drei Steuerkanälen der Mehrheitsentscheider (V) zwei Phasendetektoren (PD1, PD2)
enthält,

k1) an deren jeweils erstem Eingang der Ausgang der
Multiplexschaltung (MUX) des ersten Steuerkanals,
am zweiten Eingang des ersten Phasendetektors (PD1)
der Ausgang der Multiplexschaltung (MUX) des zweiten Steuerkanals und am zweiten Eingang des zweiten Phasendetektors (PD2) der Ausgang der Multiplexschaltung (MUX) des dritten Steuerkanals liegt,
und daß

l) aus den Ausgangssignalen der beiden Phasendetektoren
(PD1, PD2) bei Phasenabweichungen untereinander von
mindestens zwei der Taktsignale (SAI, SAII, SAIII) ein
Zähltakt (Z) für einen Vorwärts-Rückwärts-Zähler als
Adreßwähler (AW) gebildet wird (Figur 2).


7. Taktgeberanordnung nach einem der Ansprüche 2 bis 5,
d a d u r c h   g e k e n n z e i c h n e t , daß

m) die Schaltvorrichtung (SM) der Multiplexschaltung (MUX)
aus Halbleiterschaltern (T1 ... T7) gebildet ist, die
jeweils Signal- und Adreßeingänge aufweisen, wobei

m1) an den Signaleingängen die Taktsignale (SO ... S7)
am Ausgang der Verzögerungsglieder (TV1 ... TV7)
und des Oszillators (O) und an den Adreßeingängen
jeweils eine von dem Adreßwähler (AW) gebildete
binäre Adresse anliegen und

m2) die Adresse, die zur Durchschaltung von einem der
Taktsignale (SO ... S7) führt, von einem Datenregister des Adreßwählers (AW) gebildet wird, an
dessen Dateneingang die Taktsignale der Verzögerungsglieder (TV1 ... TV7) anliegen und das vom
Mehrheitsentscheider (V) mit einem Zähltakt (Z)
versorgt wird (Figur 3).

FIG 1

FIG 2

FIG 3

FIG 4